# EUROPÄISCHE PATENTSCHRIFT

(11) **EP 1 038 618 B1**
(45) Veröffentlichungstag und Bekanntmachung des Hinweises auf die Patenterteilung: **20.04.2005**
(21) Anmeldenummer: 00104943.6
(22) Anmeldetag: 08.03.2000
(51) Int. Cl.: B23B 29/24, B23B 29/18, B23B 5/02, B23B 3/16

(54) **Werkzeugkopf für eine Drehmaschine**
Tool head for a lathe
Tête d'outil pour un tour

(30) Priorität: 23.03.1999 DE 19912979
(43) Veröffentlichungstag der Anmeldung: 27.09.2000
(73) Patentinhaber: zermet Zerspanungstechnik GmbH & Co. KG, 77933 Lahr (DE)
(72) Erfinder: Styrnol, Andreas, 77933 Lahr (DE)
(74) Vertreter: Patent- und Rechtsanwaltssozietät Maucher, Börjes & Kollegen

(56) Entgegenhaltungen:
- DE-A- 1 477 114
- DE-A- 3 528 437
- US-A- 3 199 387
- US-A- 4 388 846

## Beschreibung

Die Erfindung betrifft einen Werkzeugkopf entsprechend dem Oberbegriff von Anspruch 1.

Man kennt bereits einen Werkzeugkopf der eingangs genannten Art, der mittels einer Positioniereinrichtung radial zu der Rotationsachse der Werkstückhalterung der Drehmaschine an dem scheibenförmigen Werkstück positionierbar ist. Zu Beginn der Drehbearbeitung des Werkstücks, das beispielsweise eine Bremsscheibe sein kann, wird der Werkstückkopf mit den in Arbeitslage befindlichen Bearbeitungswerkzeugen mittels der Positioniereinrichtung am äußeren Rand des zu bearbeitenden Bereichs des Werkstücks positioniert. Anschließend werden die beidseits an dem rotierenden, scheibenförmigen Werkstück angeordneten Bearbeitungswerkzeuge durch eine Relativbewegung zwischen Werkzeugkopf und Werkstück vom äußeren zum inneren Rand der zu bearbeitenden Oberflächenbereiche des Werkstücks in Vorschubrichtung bewegt. Dabei greifen die Bearbeitungswerkzeuge jeweils an einer der einander abgewandten Bearbeitungsflächen an dem Werkstück an, so daß dieses gleichzeitig an beiden Bearbeitungsflächen drehbearbeitet wird. Wenn die Bearbeitungswerkzeuge am inneren Rand der ihnen jeweils zugeordneten Bearbeitungsfläche angelangt sind, wird eines der beiden Bearbeitungswerkzeuge mittels der Verstellvorrichtung von dem Werkstück abgehoben. Zum Abheben des zweiten Bearbeitungswerkzeuges wird der Werkzeugkopf insgesamt um etwa den halben Abhebeweg des ersten Bearbeitungswerkzeugs entgegen der Abheberichtung verschoben, so daß die Bearbeitungsstellen der beidseits des Werkstücks angeordneten Bearbeitungswerkzeuge dann etwa gleich weit von dem Werkstück beabstandet sind. Der Werkzeugkopf wird dann entgegen der Vorschubrichtung der Bearbeitungswerkzeuge von dem Werkstück zurückgezogen. Dabei sind die Bearbeitungswerkzeuge von dem Werkstück beabstandet beziehungsweise abgehoben, wodurch die Bildung spiralförmiger Riefen in den planbearbeiteten Oberlächenbereichen des Werkstücks vermieden wird.

Zum Abheben des verstellbaren Bearbeitungswerkzeugs von dem Werkstück ist der das Bearbeitungswerkzeug haltende Werkzeughalter der vorbekannten Drehmaschine in Richtung der Rotationsachse des Werkstücks relativ zu dem Trägerteil aus der Arbeitslage, in der das Bearbeitungswerkzeug an dem Werkstück angreift, entgegen der Rückstellkraft einer Feder in die Abhebelage verschiebbar. Zum Abheben des Bearbeitungswerkzeugs ist eine hydraulische Verstellvorrichtung vorgesehen, welche die Feder entgegen ihrer Federkraft druckbeaufschlagt. Dabei ist die hydraulische Verstellvorrichtung in Abhebelage des Bearbeitungswerkzeugs druckbeaufschlagt und in Arbeitslage des Bearbeitungswerkzeugs drucklos. In Arbeitslage wird der Werkzeughalter durch die Rückstellkraft der Feder entgegen der Abheberichtung des Bearbeitungswerkzeugs gegen einen Anschlag des Trägerteils positioniert. Durch diese Maßnahme wird erreicht, daß bei druckloser hydraulischer Verstellvorrichtung die Bearbeitungswerkzeuge durch die Federkraft in Arbeitslage gehalten sind, so daß eine Bedienperson an der Drehmaschine gefahrlos Einrichtarbeiten, wie zum Beispiel das manuelle Positionieren der Bearbeitungswerkzeuge an den Werkstückhaltern, durchführen kann.

Der vorbekannte Werkzeughalter hat jedoch den Nachteil, daß das verstellbare Bearbeitungswerkzeug außer durch die hydraulische Verstellvorrichtung auch durch die während des Bearbeitens des Werkstücks auf die Bearbeitungswerkzeuge einwirkenden Bearbeitungskräfte verstellt werden kann. Dadurch können insbesondere Schwingungen an den Bearbeitungswerkzeugen auftreten, die Riefen oder Unebenheiten an der bearbeiteten Werkstückoberfläche zur Folge haben können. Dies ist insbesondere bei einer Schlichtbearbeitung des Werkstücks nachteilig. Derartige Schwingungen können insbesondere dann auftreten, wenn die Bearbeitungswerkzeuge nach längerer Standzeit stumpf geworden sind, so daß an den Bearbeitungswerkzeugen entsprechend größere Schneid- oder Bearbeitungskräfte auftreten. Auch kann es durch das Abheben des verstellbaren Bearbeitungswerkzeugs aus der Arbeitslage zu Dickentoleranzen an dem fertig bearbeiteten Werkstück kommen.

Aus DE 35 28 437 C2 kennt man auch bereits einen Werkzeugkopf der eingangs genannten Art, bei der einer der beiden beidseits des Aufnahmeraums für das Werkstück angeordneten Werkzeughalter zum Abheben eines der Bearbeitungswerkzeuge von dem Werkstück mittels einer Längsführung in Richtung der Rotationsachse des Werkstücks relativ zu dem anderen Werkzeughalter verschiebbar an dem Trägerteil des Werkzeugkopfs angeordnet ist. Zum Abheben des Bearbeitungswerkzeugs ist das verschiebbare Teil der Längsführung mit einer auf einer mittels eines Servomotors drehangetriebenen Kugelumlaufspindel angeordneten Kugelmutter verbunden. Auch bei diesem vorbekannten Werkzeugkopf können aufgrund des praktisch unvermeidbaren Axialspiels der Kugelmutter auf der Kugelumlaufspindel während des Bearbeitungsvorgangs Schwingungen an den Bearbeitungswerkzeugen auftreten. Ungünstig ist außerdem, daß der Verstellantrieb des Werkzeugkopfs vergleichsweise kompliziert aufgebaut ist.

Es besteht deshalb die Aufgabe, einen Werkzeugkopf der eingangs genannten Art zu schaffen, der eine Drehbearbeitung des Werkstücks mit hoher Bearbeitungsqualität und Maßgenauigkeit ermöglicht. Insbesondere soll eine Riefenbildung an den Bearbeitungsflächen des Werkstücks vermieden werden.

Die Lösung dieser Aufgabe erfolgf durch die Merkmalskombination des Anspruchs 1.

Die Rotationsrichtung der Werkstückhalterung ist also so orientiert, daß die bei in Arbeitslage befindlichem, an dem Werkstück angreifenden Bearbeitungswerkzeug von dem Werkstück auf das Bearbeitungswerkzeug ausgeübte Bearbeitungskraft die verschwenkbare Werkstückhalterung entgegen der Abheberichtung des Bearbeitungswerkzeugs gegen den Anschlag des Trägerteils positioniert. Der verschwenkbare Werkzeughalter und das daran gehaltene Bearbeitungswerkzeug sind dadurch während der Drehbearbeitung des Werkstücks fest an dem Trägerteil positioniert. Ein Abheben des verschwenkbaren Bearbeitungswerkzeugs aus der Arbeitslage und damit einhergehende Schwingungen an dem verstellbaren Bearbeitungswerkzeug, die Riefen an den Bearbeitungsflächen des Werkstücks zur Folge haben könnten, werden somit vermieden. Da die paarweise an dem Werkstück angreifenden Bearbeitungswerkzeuge fest zueinander positioniert sind, werden außerdem Dickentoleranzen an dem bearbeiteten scheibenförmigen Werkstück vermieden. Der Werkzeugkopf ermöglicht deshalb eine Drehbearbeitung des Werkstücks mit hoher Bearbeitungsqualität, Maßgenauigkeit und Wiederholgenauigkeit.

Eine besonders vorteilhafte Ausführungsform der Erfindung sieht vor, daß die Bearbeitungsstelle des verschwenkbaren Bearbeitungswerkzeugs in Arbeitslage von der durch die Schwenkachse der Schwenklagerung und die Rotationsachse der Werkstückhalterung oder eine zu der Rotationsachse parallele Achse aufgespannten Ebene beabstandet ist. Die in einer rechtwinklig zu der Schwenkachse angeordneten Ebene verlaufende Verbindungslinie zwischen der Bearbeitungsstelle des verschwenkbaren Bearbeitungswerkzeugs und der Schwenkachse ist dann schräg zu der Rotationsachse der Werkstückhalterung beziehungsweise des Werkstückes angeordnet, so daß die verschwenkbare Werkzeughalterung zum Abheben des Bearbeitungswerkzeuges von dem Werkstück nur um einen relativ kleinen winkel verschwenkt werden muß. Dennoch wird ein vergleichsweise großer Abhebeweg erreicht.

Vorteilhaft ist, daß der verschwenkbare Werkzeughalter mittels eines insbesondere hydraulischen Verstellantriebs gegen die Rückstellkraft einer Feder aus der Arbeitslage in die Abhebelage verstellbar ist. Das an dem verschwenkbaren Werkzeughalter gehaltene Bearbeitungswerkzeug ist dann bei drucklosem hydraulischem Verstellantrieb durch die Rückstellkraft der Feder in Arbeitslage positioniert, so daß eine Bedienperson bei drucklosem Verstellantrieb an den Bearbeitungswerkzeugengefahrlos Einrichtarbeiten durchführen kann. Der hydraulische Verstellantrieb kann auf einfache Weise mittels eines hydraulischen Ventils betätigt werden, das beispielsweise über einen Digitalausgang der Maschinensteuerung der Drehmaschine angesteuert werden kann. Der Werkzeugkopf kann dadurch besonders gut mit manuell zu bedienenden Drehmaschinen, die nicht über eine bahnprogrammierte CNC-Steuerung verfügen, kombiniert werden. Insbesondere können ältere Drehmaschinen, die noch in großer Anzahl in den Betrieben vorhanden sind, mit dem Werkzeugkopf nachgerüstet werden.

Es ist vorgesehen, daß die Schwenklagerung der Verstellvorrichtung einen in eine Lagerhöhlung des Trägerteils eingreifenden, vorzugsweise in Wälzlagern gehaltenen Lagerzapfen aufweist, der an einem seiner Axialenden das verschwenkbare Bearbeitungswerkzeug trägt, und daß an diesem Lagerzapfen der Verstellantrieb angreift. Das Trägerteil kann dann als einstückiges Gehäuseteil ausgebildet sein, das die beiden beidseits des Aufnahmeraums für das Werkstück angeordneten Werkzeughalter miteinander verbindet. Die Bearbeitungswerkzeuge sind dann in Arbeitslage noch genauer zueinander positioniert.

Bei einer vorteilhaften Ausführungsform der Erfindung ist vorgesehen, daß der Lagerzapfen umfangsseitig eine Aufnahmevertiefung aufweist, in die ein Querbolzen eingesetzt ist, der mit einem über die Mantelfläche des Lagerzapfens vorstehenden freien Ende einen Gegenanschlag bildet, der in Arbeitslage des verschwenkbaren Bearbeitungswerkzeugs gegen den ersten Anschlag und/oder in Abhebelage des verschwenkbaren Bearbeitungswerkzeugs gegen den zweiten Anschlag des Trägerteils positionierbar ist. Der in der Lagerhöhlung des Trägerteils gelagerte Lagerzapfen ermöglicht eine besonders gute Abstützung von während der Drehbearbeitung des Werkstücks an dem verschwenkbaren Bearbeitungswerkzeug angreifenden Querkräften. Der Querbolzen ist vorzugsweise in einem zu dem verschwenkbaren Bearbeitungswerkzeug benachbarten Bereich angeordnet, um eine möglichst torsionssteife Abstützung des Bearbeitungswerkzeugs gegen den Anschlag des Trägerteils zu erreichen.

Bei einer zweckmäßigen Ausführungsform der Erfindung ist vorgesehen, daß daß der erste, in Arbeitslage des verschwenkbaren Bearbeitungswerkzeugs an dem Gegenanschlag anliegende Anschlag und/oder der zweite, in Abhebelage des Bearbeitungswerkzeugs an dem Gegenanschlag anliegende Anschlag des Trägerteils durch eine in ihrer Einschraublänge verstellbare Anschlagschraube gebildet ist. Die Schwenkposition der verstellbaren Werkstückhalterung in der Arbeits- und/oder Abhebelage des Bearbeitungswerkzeugs kann dann auf einfache Weise durch Verstellen der Einschraublänge der jeweiligen Anschlagschraube eingestellt werden, beispielsweise um die Arbeits- und/oder Abhebelage des verschwenkbaren Bearbeitungswerkzeugs an Werkstücke mit unterschiedlichen Abmessungen anzupassen

Der Lagerzapfen trägt ein Antriebsritzel, das zum Verschwenken des Bearbeitungswerkzeugs mit einer Zahnstange des Verstellantriebs kämmt. Dadurch ergibt sich ein besonders kompakt aufgebauter Werkzeugkopf.

Weiterhin ist vorgesehen, daß das dem Lagerzapfen abgewandte Ende der Zahnstange mit einem Hubkolben verbunden ist, der an einen druckbeaufschlagbaren Arbeitsraum angrenzt, daß der Hubkolben gegen die Feder, insbesondere eine Tellerfeder abgestützt ist und durch Druckbeaufschlagung des Arbeitsraum entgegen der Federkraft dieser Feder aus einer Ruhelage in eine Arbeitslage verschiebbar ist. Dabei ergibt sich durch die Feder ein einfach aufgebauter Verstellantrieb mit einem einseitig druckbeaufschlagten Hydraulikkolben.

Bei einer besonders vorteilhaften Ausführungsform der Erfindung sind der erste und/oder zweite Anschlag, die Schwenklagerung und/oder der Verstellantrieb in einer insbesondere gegen Staub und/oder Flüssigkeiten abgedichteten Innenhöhlung des Trägerteils angeordnet. Dadurch werden Positionierungenauigkeiten des verschwenkbaren Bearbeitungswerkzeugs und/oder Schwingungen an den Bearbeitungswerkzeugen, die beispielsweise durch zwischen Anschlag und Gegenanschlag befindlichen Staub, Späne oder dergleichen Verschmutzungen verursacht sein können, zuverlässig vermieden.

Nachfolgend sind Ausführungsbeispiele der Erfindung anhand der Zeichnung näher erläutert. Es zeigen:
- Fig. 1: eine Seitenansicht eines Werkzeugkopfs mit beidseits eines im Querschnitt dargestellten, scheibenförmigen Werkstücks angreifenden Bearbeitungswerkzeugen,
- Fig. 2: eine Unteransicht des Werkzeugkopfs gemäß Fig. 1 mit in Arbeitslage befindlichen, an dem Werkstück angreifenden Bearbeitungswerkzeugen,
- Fig. 3: eine Darstellung ähnlich Fig. 2, wobei jedoch eines der Bearbeitungswerkzeuge von dem Werkstück abgehoben ist,
- Fig. 4: eine teilweise im Schnitt gehaltene Seitenansicht eines Werkzeugkopfs ähnlich Fig. 1,

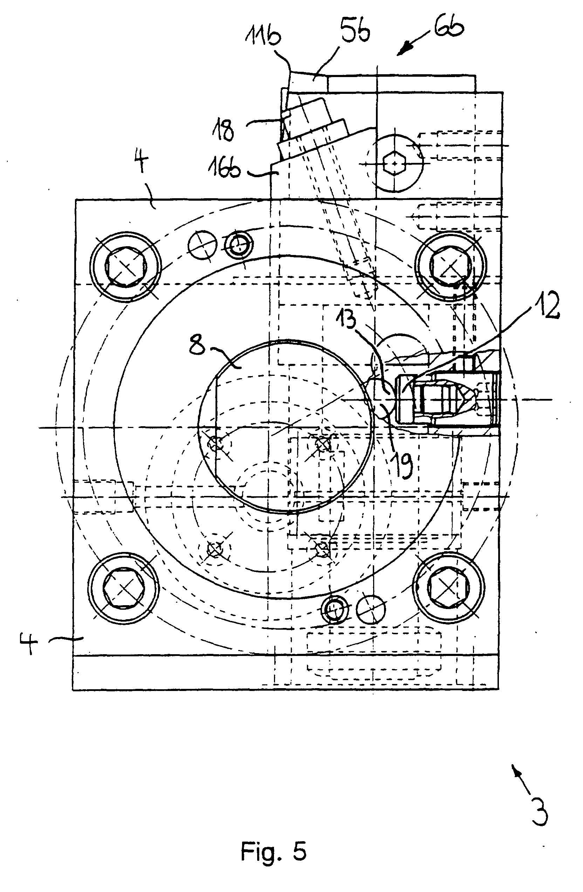

- Fig. 5: eine Ansicht auf den Werkzeugkopf aus der in Fig. 4 mit V bezeichneten Richtung, wobei verdeckte Kanten strichliniert dargestellt sind,

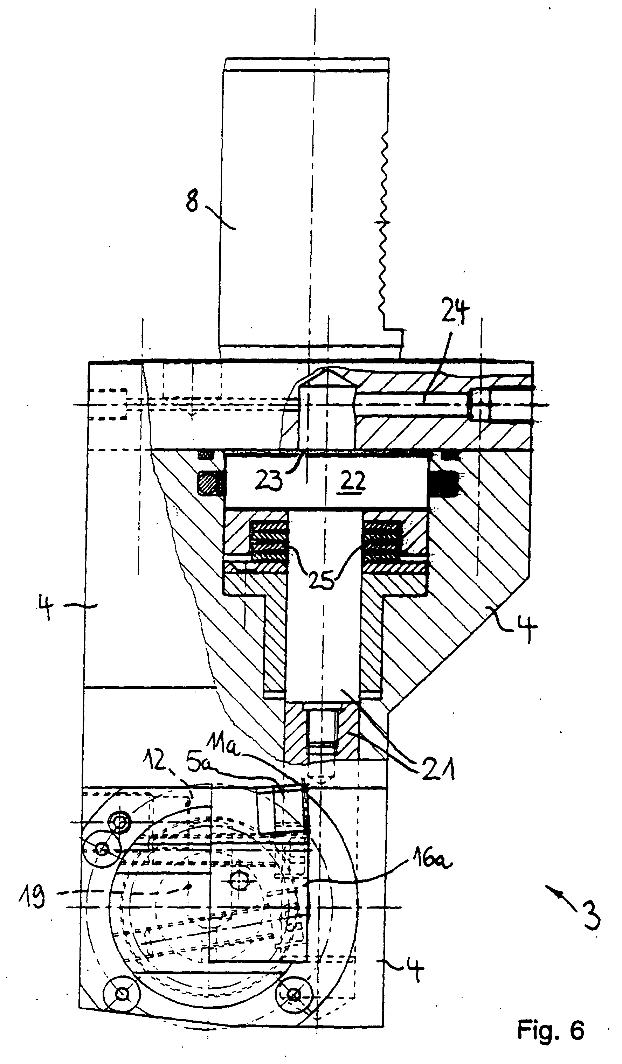

- Fig. 6: eine Aufsicht auf den in Fig. 4 dargestellten Werkzeugkopf, wobei dieser teilweise im Querschnitt dargestellt ist und

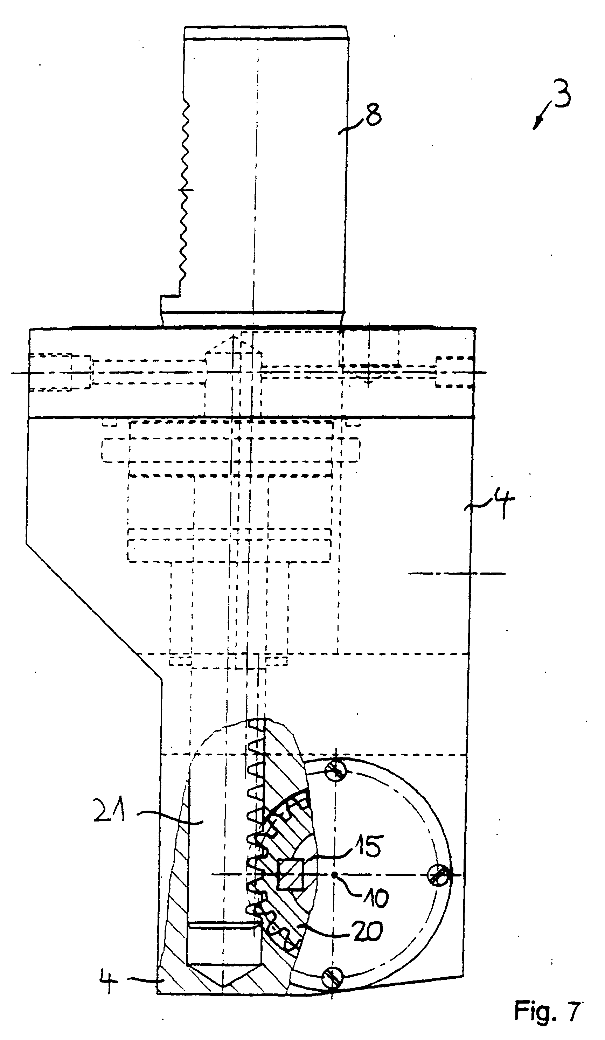

- Fig. 7: eine Ansicht auf den Werkzeugkopf aus der in Fig. 4 mit VII bezeichneten Richtung, wobei der Werkzeugkopf teilweise im Querschnitt dargestellt ist und verdeckte Kanten strichliniert angedeutet sind.

Eine Drehmaschine weist eine in der Zeichnung nicht näher dargestellte Werkstückhalterung für ein scheibenförmiges Werkstück 1 auf, die bezüglich einer Rotationsachse 2 drehangetrieben ist. Das Werkstück 1 kann beispielsweise eine Bremsscheibe oder eine Schwungscheibe für einen Verbrennungsmotor sein. Die Drehmaschine hat einen Werkzeugkopf 3, der ein Trägerteil 4 aufweist, das zwei, jeweils ein Bearbeitungswerkzeug 5a, 5b haltende Werkzeughalter 6a, 6b trägt. Zum beidseitigen und gleichzeitigen Drehbearbeiten des scheibenförmigen Werkstücks 1 sind die Bearbeitungswerkzeuge 5a, 5b beidseits eines Aufnahmeraums 7 für das Werkstück 1 angeordnet.

Der Werkzeugkopf 3 hat eine Steckkupplung 8, die lösbar mit einer dazu passenden, insbesondere an einem Werkzeugrevolver angeordneten Aufnahme der Drehmaschine verbindbar ist. Bei den in der Zeichnung gezeigten Ausführungsbeispielen erstreckt sich die Steckkupplung 8 jeweils parallel zur Rotationsachse des Werkstücks bzw. der Werkstückhalterung der Drehmaschine. Selbstverständlich kann die Anbindung aber auch in einer anderen Richtung und Ausführung zur Rotationsachse angeordnet sein, insbesondere rechtwinklig dazu.

Mittels einer Positioniereinrichtung ist der Werkzeugkopf 3 insgesamt in Richtung der Rotationsachse 2 relativ zu der Werkstückhalterung sowohl quer zur Rotationsachse 2 in der durch den Doppelpfeil Pf1 markierten Vorschubrichtung der Bearbeitungswerkzeuge 5a, 5b, als auch parallel zur Rotationsachse 2 in Zustellrichtung Pf2 verschiebbar.

Der das Bearbeitungswerkzeug 5a haltende Werkzeughalter 6a ist zum Abheben des in Arbeitslage befindlichen, an dem Werkstück 1 angreifenden Bearbeitungswerkzeugs 5a von dem Werkstück 1 mittels einer Verstellvorrichtung aus der Arbeitslage in eine Abhebelage bringbar, in welcher das Bearbeitungswerkzeug 5a von dem Werkstück 1 beabstandet angeordnet ist. Die Verstellvorrichtung weist dazu eine Schwenklagerung 9 auf, mittels welcher der Werkzeughalter 6a zusammen mit dem daran gehaltenen Bearbeitungswerkzeug 5a um eine in einer orthogonal zu der Rotationsachse 2 angeordneten Ebene verlaufende, von der Bearbeitungsstelle 11a des Bearbeitungswerkzeugs 5a beabstandete Schwenkachse 10 relativ zu dem Trägerteil 4 verschwenkbar gelagert ist.

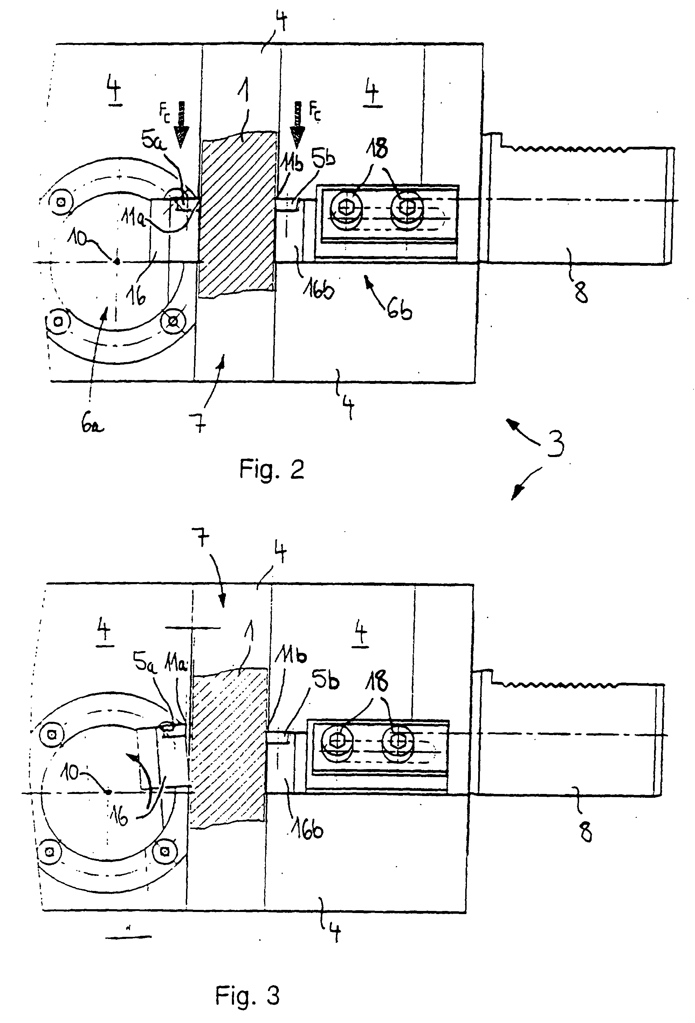

Das Trägerteil 4 trägt einen als Anschlagschraube ausgebildeten Anschlag 12, gegen den der verschwenkbare Werkzeughalter 6a mit einem Gegenanschlag 13 entgegen der Abheberichtung des Bearbeitungswerkzeugs 5a in Arbeitslage positionierbar ist. Wie aus Fig. 2 besonders gut erkennbar ist, ist die Rotationsrichtung der das Werkstück 1 haltenden Werkzeughalterung so orientiert, daß die bei der Drehbearbeitung an der Bearbeitungsstelle 11a an dem Bearbeitungswerkzeug 5a angreifende Bearbeitungskraft F_{c} den Gegenanschlag 13 der Werkzeughalterung 6a an den Anschlag 12 des Trägerteils 4 andrückt. Das Bearbeitungswerkzeug 5a ist dadurch während der Drehbearbeitung mit großer Genauigkeit an dem Werkstück 1 positioniert. Insbesondere werden Schwingungen des Bearbeitungswerkzeugs 5a während der Drehbearbeitung des Werkstücks 1 vermieden.

Die Schwenklagerung 9 der Verstellvorrichtung weist einen in einer Lagerhöhlung des Trägerteils 4 in Wälzlagern 14 gehaltenen Lagerzapfen 15 auf, der an einem seiner Axialenden ein in Richtung der Schwenkachse 10 verschiebbar und festlegbar gelagertes Schlittenteil 16a trägt. Mittels des Schlittenteils 16a kann das Bearbeitungswerkzeug 5a in Richtung der mit dem Doppelpfeil Pf1 bezeichneten Richtung der Schwenkachse 10 relativ zu dem Trägerteil 4 positioniert werden. Dabei erfolgt die Positionierung des Bearbeitungswerkzeugs 5a vorzugsweise so, daß dieses den gleichen Abstand zur Rotationsachse 2 aufweist, wie das Bearbeitungswerkzeug 5b. Das Schlittenteil 16a ist mittels Halteschrauben 18 an dem Lagerzapfen 15 festklemmbar.

Die Werkzeughalterung 6b weist ein parallel zu der Rotationsachse 2 der Werkstückhalterung zu dem Trägerteil 4 verschiebbares Schlittenteil 16b auf, mittels dem die Dicke b des fertig bearbeiteten scheibenförmigen Bereichs des Werkstücks 1 einstellbar ist. Das Schlittenteil 16b trägt einen Klemmhalter 17, mit dem das Bearbeitungswerkzeug 5b gegen das Schlittenteil 16b festklemmbar ist. Mittels Halteschrauben 18 ist das Schlittenteil 16b seinerseits an dem Trägerteil 4 festlegbar. Die Bearbeitungswerkzeuge 5a, 5b sind also mittels der Schlittenteile 16a, 16b in quer zueinander verlaufenden Richtungen relativ zueinander positionierbar.

An den Schlittenteilen 16a, 16b sind jeweils Klemmhalter 17 befestigt, mit dem das jeweilige Bearbeitungswerkzeug 5a, 5b, das beispielsweise eine Schneidplatte sein kann, an dem Werkzeughalter 6a, 6b fixiert werden kann.

Wie aus Fig. 2 besonders gut erkennbar ist, ist die Bearbeitungsstelle 11a des verschwenkbaren Bearbeitungswerkzeuges 5a in Arbeitslage von der durch die Schwenkachse 10 der Schwenklagerung 9 und einer zu der Rotationsachse 2 des Werkstücks 1 parallelen Achse aufgespannten Ebene beabstandet. Der Lagerzapfen 15 braucht dadurch zum Abheben des Bearbeitungswerkzeuges 5a von dem Werkstück 1 nur um einen kleinen Winkel verschwenkt zu werden.

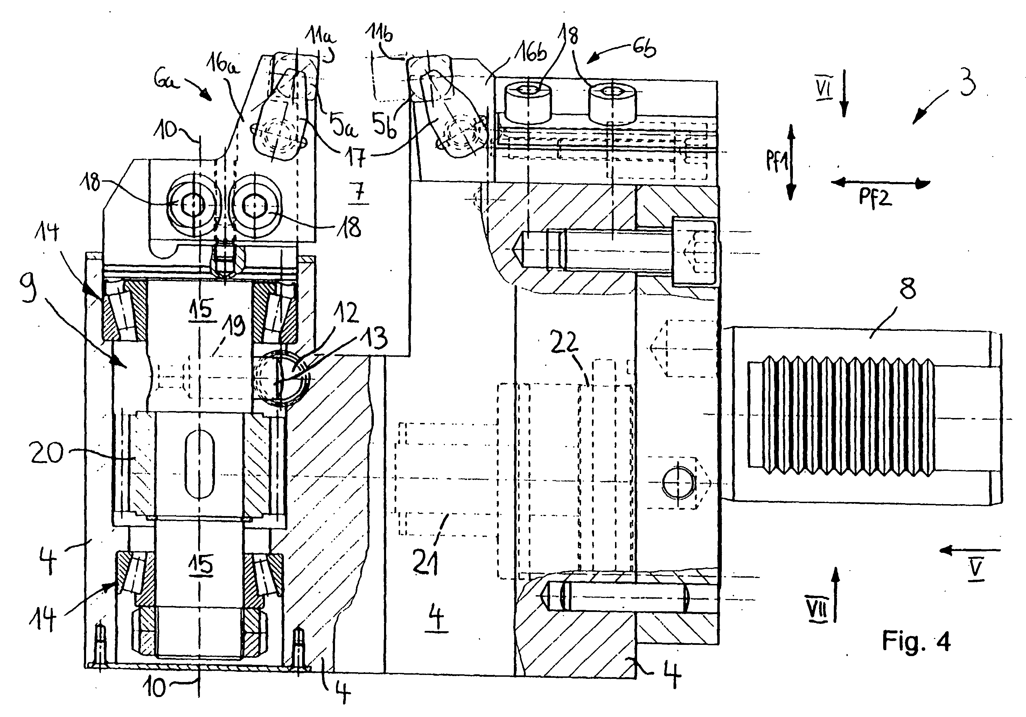

In Fig. 4 ist erkennbar, daß der Lagerzapfen 15 an seinem Außenumfang eine Aufnahmevertiefung aufweist, in die ein Querbolzen 19 eingesetzt ist, der mit einem seitlich an dem Lagerzapfen 15 vorstehenden freien Ende den gegen den Anschlag 12 des Trägerteils 4 positionierbaren Gegenanschlag 13 bildet. In Fig. 4 ist erkennbar, daß der Querbolzen 19 in einem werkzeugnahen Bereich zwischen den beiden als Kegelrollenlager ausgebildeten Wälzlagern 14 angeordnet ist. Dadurch wird eine hohe Biegesteifigkeit der Abstützung erreicht. Zum Einstellen der Schwenkposition der Werkzeughalterung 6a in der Arbeitslage des Bearbeitungswerkzeugs 5a ist die den Anschlag 12 bildende Anschlagschraube in ihrer Einschraublänge verstellbar. Die Anschlagschraube ist dazu mit einer Gewindebohrung des Trägerteils 4 verschraubt, in der sie außenseitig an dem Trägerteil 4 zugänglich ist.

Der Lagerzapfen 15 trägt an seinem Außenumfang ein Antriebsritzel 20, das zum Verschwenken des Bearbeitungswerkzeuges 5a zwischen der Arbeits- und der Abhebestellung mit einer Zahnstange 21 des Verstellantriebs in Eingriff steht. Das dem Lagerzapfen 15 abgewandte Ende der Zahnstange 21 ist mit einem Hubkolben verbunden, der in einem Arbeitszylinder angeordnet ist und einen druckbeaufschlagbaren Arbeitsraum 23 begrenzt. Dieser ist über einen Kanal 24 mit einer Druckguelle verbunden. An der dem Arbeitsraum 23 abgewandten Seite des Hubkolbens 22 ist eine Feder 25 angeordnet, die mit einem Ende gegen die dem Arbeitsraum 23 abgewandte Rückseite des Hubkolbens 22 und mit ihrem anderen Axialende gegen das Trägerteil 4 abgestützt ist. Durch Druckbeaufschlagung des Arbeitsraums 23 ist der Hubkolben 22 aus einer Ruhelage, in der das mittels des Hubkolbens 22 verschwenkbare Bearbeitungswerkzeug 5a in Arbeitslage angeordnet ist und an dem Werkstück 1 angreift, entgegen der Rückstellkraft der Feder 25 in eine Arbeitsstellung verschiebbar, in der das Bearbeitungswerkzeug 5a von dem Werkstück 1 abgehoben ist. Somit ist der Werkzeughalter 6a bei drucklosem Arbeitsraum 23 durch die Rückstellkraft der Feder 25 mit dem Gegenanschlag 13 gegen den Anschlag 12 des Trägerteils 4 positioniert, d.h. das Bearbeitungswerkzeug befindet sich in Arbeitsstellung. Eine Bedienperson kann dadurch bei drucklosem Hubkolben 22 gefahrlos Einrichtarbeiten an den Werkzeughaltern 6a, 6b durchführen. So können beispielsweise die Bearbeitungswerkzeuge 5a, 5b ausgewechselt und/oder mittels der Schlittenteile 16a, 16b an dem Aufnahmeraum 7 für das Werkstück 1 positioniert werden. Erwähnt werden soll noch, daß die Feder 25 als Tellerfeder mit mehreren, zu einem Stapel angeordneten ringförmigen Federelementen ausgebildet ist und daß die Zahnstange 21 die von den ringförmigen Federelementen umgrenzte Öffnung der Feder 25 durchsetzt. Dadurch ergibt sich ein besonders kompakt aufgebauter Werkzeugkopf 3.

Das Trägerteil 4 ist als Gehäuse mit einer Innenhöhlung ausgebildet, die nach außen hin abgedichtet ist. In der Innenhöhlung sind das Antriebsritzel 20, die Zahnstange 21, der Gegenanschlag 13 und der Anschlag 12 gegen außerhalb des Gehäuse befindliche Stäube und/oder Flüssigkeiten geschützt angeordnet. Eine Verschmutzung dieser Teile sowie damit einhergehende Fehlpositionierungen des Bearbeitungswerkzeugs 5a, des Werkstückhalters 6a sowie Schwingungen und dergleichen Instäbilitäten des Werkzeugkopfs 3 während der Drehbearbeitung des Werkstücks 1 werden dadurch vermieden.

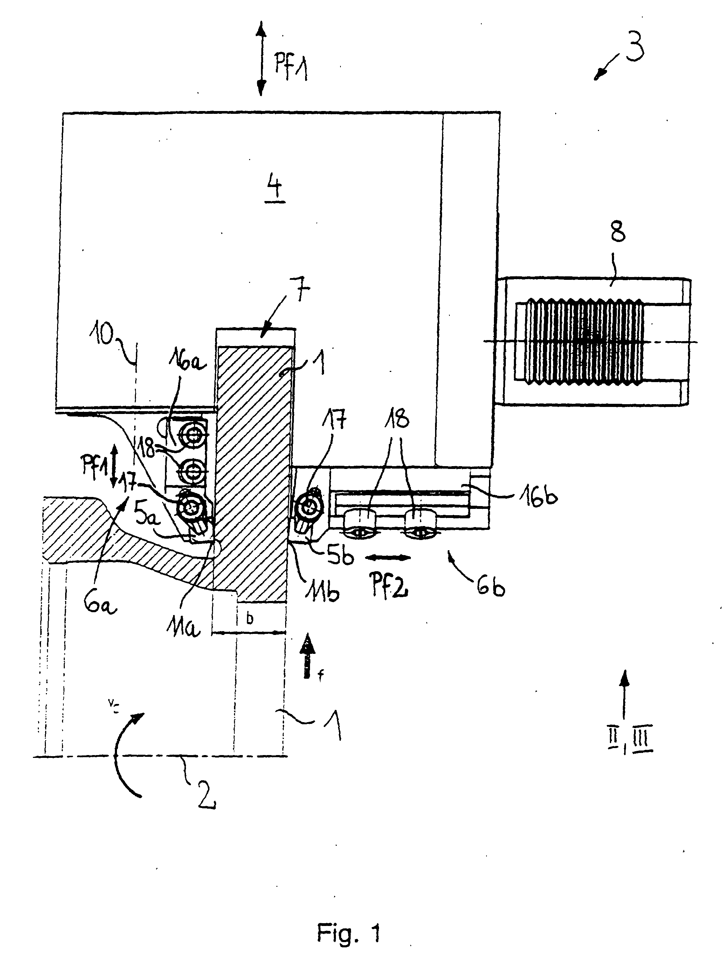

Nachstehend ist der Arbeitsablauf bei der Drehbearbeitung des Werkstücks 1 erläutert. Zu Beginn der Bearbeitung wird der Werkzeugkopf 3 mit den in Arbeitslage befindlichen Bearbeitungswerkzeugen 5a, 5b so an dem Werkstück 1 positioniert, daß die Bearbeitungsstellen 11a, 11b der Bearbeitungswerkzeuge 5a, 5b am äußeren Rand des zu bearbeitenden scheibenförmigen Bereichs des Werkstücks 1 angreifen. Anschließend wird der Werkzeugkopf in Vorschubrichtung Pf1 verschoben, bis die Bearbeitungsstellen 11a, 11b den inneren Rand des zu bearbeitenden Bereiches des Werkstück 1 erreicht haben (Fig. 1). Dann wird das Bearbeitungswerkzeug 5a durch eine Schwenkbewegung um die Schwenkachse 10 von dem Werkstück 1 abgehoben. Zum Abheben des Bearbeitungswerkzeugs 5b wird der Werkzeugkopf 3 insgesamt um etwa den halben Abhebeweg des Bearbeitungswerkzeugs 5a in Richtung der Rotationsachse 2 verschoben, so daß die Bearbeitungsstellen 11a, 11b der beiden Bearbeitungswerkzeuge 5a, 5b dann etwa gleich weit von dem Werkstück 1 beabstandet sind. Danach wird der Werkzeugkopf 3 entgegen der Vorschubrichtung von dem Werkstück 1 zurückgezogen.

Erwähnt werden soll noch, daß die erfindungsgemäße Drehmaschine auch als Schrägbettmaschine ausgebildet sein kann. Gegebenenfalls kann der Werkzeugkopf 3 auch an einem Roboterarm angeordnet sein.

## Patentansprüche

1. Werkzeugkopf (3) für eine Drehmaschine, die eine um eine Rotationsachse (2) drehangetriebene Werkstückhalterung für ein scheibenförmiges Werkstück (1) aufweist, wobei der Werkzeugkopf (3) ein Trägerteil (4) mit wenigstens zwei, jeweils ein Bearbeitungswerkzeug (5a, 5b) haltenden Werkzeughaltern (6a, 6b) aufweist, wobei die Bearbeitungswerkzeuge (5a, 5b) zum beidseitigen und gleichzeitigen Drehbearbeiten des scheibenförmigen Werkstücks (1) beidseits eines Aufnahmeraums (7) für das Werkstück (1) angeordnet sind, wobei zumindest eine der ein Bearbeitungswerkzeug (5a) haltenden Werkzeughalter (6a) mittels einer einen Verstellantrieb aufweisenden Verstellvorrichtung zum Abheben des Bearbeitungswerkzeugs (5a) von dem Werkstück (1) aus einer Arbeitslage in eine Abhebelage verstellbar ist, wobei der Verstellantrieb einen an einen druckbeaufschlagbaren Arbeitsraum (23) angrenzenden, gegen eine Feder (25) abgestützten Hubkolben (22) aufweist, der durch Druckbeaufschlagung des Arbeitsraum (23) entgegen der Federkraft der Feder (25) aus einer Ruhelage in eine Arbeitslage verschiebbar ist, **dadurch gekennzeichnet, dass** die Verstellvorrichtung eine Schwenklagerung (9) für den ihr zugeordneten Werkzeughalter (6a) aufweist, mittels der das daran gehaltene Bearbeitungswerkzeug (5a) um eine quer zur Rotationsachse (2) angeordnete, von der Bearbeitungsstelle (11a) des Bearbeitungswerkzeugs (5a) beabstandete Schwenkachse (10) relativ zu dem Trägerteil (4) verschwenkbar gelagert ist, dass die Schwenklagerung (9) einen in eine Lagerhöhlung des Trägerteils (4) eingreifenden Lagerzapfen (15) aufweist, der an einem seiner Axialenden das Bearbeitungswerkzeug (5a) trägt, dass der Lagerzapfen (15) ein Antriebsritzel (20) trägt, das zum Verschwenken des Bearbeitungswerkzeugs (5a) mit einer Zahnstange (21) kämmt, deren dem Lagerzapfen (15) abgewandtes Ende mit dem Hubkolben (22) verbunden ist, und dass das Trägerteil (4) mindestens einen Anschlag (12) aufweist, gegen den der verschwenkbare Werkzeughalter (6a) durch die bei der Drehbearbeitung an dem verschwenkbaren Bearbeitungswerkzeug (5a) angreifende Bearbeitungskraft entgegen der Abheberichtung des Bearbeitungswerkzeugs (5a) in Arbeitslage positionierbar ist.

2. Werkzeugkopf nach Anspruch 1, **dadurch gekennzeichnet, daß** die Bearbeitungsstelle (11a) desverschwenkbaren Bearbeitungswerkzeugs (5a) in Arbeitslage von der durch die Schwenkachse (10) der Schwenklagerung (9) und die Rotationsachse (2) der Werkstückhalterung oder eine zu der Rotationsachse (2) parallele Achse aufgespannten Ebene beabstandet ist.

3. Werkzeugkopf nach Anspruch 1 oder 2, **dadurch gekennzeichnet, daß** das Trägerteil (4) zusätzlich zu dem ersten Anschlag (12), gegen den der verschwenkbare Werkzeughalter (6a) in Arbeitslage positionierbar ist, einen zweiten Anschlag aufweist, gegen den der Werkzeughalter (6a) in der Abhebelage in Abheberichtung des Bearbeitungswerkzeugs (5a) positionierbar ist.

4. Werkzeugkopf nach einem der Ansprüche 1 bis 3, **dadurch gekennzeichnet, daß** der Lagerzapfen (15) umfangsseitig eine Aufnahmevertiefung aufweist, in die ein Querbolzen (19) eingesetzt ist, der mit einem über die Mantelfläche des Lagerzapfens (15) vorstehenden freien Ende einen Gegenanschlag (13) bildet, der in Arbeitslage des verschwenkbaren Bearbeitungswerkzeugs (5a) gegen den ersten Anschlag (12) und/oder in Abhebelage des verschwenkbaren Bearbeitungswerkzeugs gegen den zweiten Anschlag des Trägerteils (4) positionierbar ist.

5. Werkzeugkopf nach einem der Ansprüche 1 bis 4, **dadurch gekennzeichnet, daß** der erste, in Arbeitslage des verschwenkbaren Bearbeitungswerkzeugs (5a) an dem Gegenanschlag (13) anliegende Anschlag (12) und/oder der zweite, in Abhebelage des Bearbeitungswerkzeugs (5a) an dem Gegenanschlag (13) anliegende Anschlag des Trägerteils (4) durch eine in ihrer Einschraublänge verstellbare Anschlagschraube gebildet ist.

6. Werkzeugkopf nach einem der Ansprüche 1 bits 5, **dadurch gekennzeichnet, daß** der erste Anschlag (12), der zweite Anschlag, die Schwenklagerung (9) und/oder der Verstellantrieb in einer insbesondere gegen Staub und/oder Flüssigkeiten abgedichteten Innenhöhlung des Trägerteils (4) angeordnet sind.

## Claims

1. Tool head (3) for a lathe which comprises a workpiece holder, rotationally driven about a rotation axis (2), for a disc-shaped workpiece (1), the tool head (3) having a carrier part (4) with at least two tool holders (6a, 6b) each holding a machining tool (5a, 5b), the machining tools (5a, 5b) being arranged on both sides of an accommodating chamber (7) for the workpiece (1) for simultaneous rotary machining of both sides of the disc-shaped workpiece (1), while at least one of the tool holders (6a) holding a machining tool (5a) is movable by means of a displacement device having a displacement drive in order to lift the machining tool (5a) away from the workpiece (1) from a working position into a retracted position, the displacement drive having a lifting piston (22) which is adjacent to a working chamber (23) adapted to be subjected to pressure and which bears on a spring (25), said lifting piston being movable from a resting position into a working position as the result of the application of pressure to the working chamber (23) counter to the spring force of the spring (25), **characterised in that** the displacement device has a pivot mounting (9) for the tool holder (6a) associated therewith, by means of which the machining tool (5a) held thereon is mounted to be pivotable, relative to the carrier part (4), about a pivot axis arranged transversely with respect to the rotation axis (2) and spaced from the machining point (11a) of the machining tool (5a), **in that** the pivot mounting (9) has a mounting pin (15) engaging in a mounting cavity in the carrier part (4), said pin carrying the machining tool (5a) at one of its axial ends, **in that** the mounting pin (15) carries a drive pinion (20) which meshes with a rack (21) in order to pivot the machining tool (5a), the end of said rack remote from the mounting pin (15) being connected to the lifting piston (22), and **in that** the carrier part (4) has at least one abutment (12) against which the pivotable tool holder (6a) can be positioned in the operating position by means of the machining force acting on the pivotable machining tool (5a) during rotary machining, counter to the direction of retraction of the machining tool (5a).

2. Tool head according to claim 1, **characterised in that** the machining point (11a) of the pivotable machining tool (5a) in the operating position is spaced from the plane set by the pivot axis (10) of the pivot mounting (9) and the rotation axis (2) of the workpiece holder (9) or an axis parallel to the rotation axis (2).

3. Tool head according to claim 1 or 2, **characterised in that** the carrier part (4) in addition to the first stop (12) against which the pivotable tool holder (6a) can be positioned in the operating position has a second stop against which the tool holder (6a) can be positioned in the raised position in the direction of retraction of the machining tool (5a).

4. Tool head according to one of claims 1 to 3, **characterised in that** the bearing pin (15) comprises on the circumferential side a receiving recess into which a transverse bolt (19) is inserted which forms, with a free end projecting over the outer surface of the mounting pin (15), a counter-stop (13) which can be positioned against the first stop (12) in the operating position of the pivotable machining tool (5a) and/or against the second stop of the carrier part (4) in the raised position of the pivotable machining tool.

5. Tool head according to one of claims 1 to 4, **characterised in that** the first stop (12) abutting on the counter-stop (13) in the operating position of the pivotable machining tool (5a) and/or the second stop of the carrier part (4) abutting on the counter-stop (13) in the raised position of the pivotable machining tool (5a) is formed by a stop screw which is adjustable in its length of engagement.

6. Tool head according to one of claims 1 to 5, **characterised in that** the first stop (12), the second stop, the pivot mounting (9) and/or the displacement drive are disposed in an inner cavity in the carrier part (4) which is sealed off particularly against dust and/or liquids.

## Revendications

1. Tête d'outil (3) pour un tour, du type comportant un organe de maintien d'une pièce à usiner entraîné en rotation autour d'un axe de rotation (2), pour une pièce à usiner en forme de disque (1), la tête d'outil (3) comportant une portion porteuse (4) présentant au moins deux porte-outils (6a, 6b), portant chacun un outil d'usinage (5a, 5b), les outils d'usinage (5a, 5b) étant disposés sur les deux côtés d'un espace de prise (7) de la pièce à usiner en forme de disque (1), en vue du tournage simultané sur les deux côtés de la pièce à usiner en forme de disque (1), au moins un des porte-outils (6a) portant un outil d'usinage (5a) étant réglable au moyen d'un dispositif de réglage présentant une commande de réglage en vue du relèvement de l'outil d'usinage (5a) au-dessus de la pièce à usiner (1), d'une position de travail à une position relevée, la commande de réglage présentant un piston à va-et-vient (22) maintenu par un ressort (25) et délimitant un espace de travail sur lequel peut s'exercer une pression, ce piston pouvant se déplacer en s'écartant d'une position de repos sous l'effet de la pression s'exerçant sur l'espace de travail (23), à l'encontre de la force élastique du ressort (25), **caractérisé en ce que** le dispositif de réglage présente un palier de pivotement (9) pour le porte-outils qui lui est associé (6a), grâce auquel l'outil d'usinage qu'il porte (5a) est monté pivotant par rapport à la portion porteuse (4), autour d'un axe de pivotement (10) espacé de la position d'usinage (11 a) de l'outil d'usinage (5a) et transversalement à l'axe de rotation (2), **en ce que** le palier de pivotement (9) présente une cheville de montage (15) s'insérant dans un évidement de montage de la portion porteuse (4) et qui porte à l'une de ses extrémités axiales l'outil d'usinage (5a), **en ce que** la cheville de montage (15) porte un pignon d'entraînement (20) qui engrène avec une crémaillère (21), en vue du pivotement de l'outil d'usinage (5a) dont l'extrémité opposée à la cheville de montage (15) est reliée au piston à va-et-vient (22), et **en ce que** la portion porteuse (4) présente au moins une butée (12) contre laquelle, lors de l'usinage rotatif, le porte-outils pivotant (6a) peut être positionné en position de travail sur l'outil d'usinage pivotant (5a) par la force d'usinage s'exerçant à l'inverse de la direction de relèvement de l'outil d'usinage (5a).

2. Tête d'outil selon la revendication 1, **caractérisée en ce que** la position d'usinage (11a) de l'outil d'usinage pivotant (5a), en position de travail, est espacée du plan défini par l'axe de pivotement (10) du palier de pivotement (9) et par l'axe de rotation (2) du porte-outils ou un axe parallèle à l'axe de rotation (2).

3. Tête d'outil selon l'une ou l'autre des revendications 1 ou 2, **caractérisée en ce que** la portion porteuse (4), en plus de la première butée (12), contre laquelle le porte-outil pivotant (6a) peut être positionné en position de travail, présente une seconde butée contre la quelle le porte-outils (6a) peut être positionné en position de relèvement dans la direction du relèvement de l'outil d'usinage (5a).

4. Tête d'outil selon l'une quelconque des revendication 1 à 3, **caractérisée en ce que** la cheville de montage (15) présente sur son côté périphérique un évidement de réception dans lequel est inséré un boulon transversal (19) qui, par une extrémité libre dépassant la surface chemisée de la cheville de montage (15), constitue une contre-butée (13) qui, dans la position de travail de l'outil d'usinage pivotant (5a), peut être positionnée contre la première butée (12), et/ou, dans la position relevée de l'outil d'usinage pivotant, peut être positionnée contre la seconde butée de la portion porteuse (4).

5. Tête d'outil selon l'une quelconque des revendications 1 à 4, **caractérisée en ce que** la première butée (12) située contre la contre-butée (13) dans la position de travail de l'outil d'usinage pivotant (5a) et/ou la seconde butée de la portion porteuse (4) située contre la contre-butée (13) dans la position relevée de l'outil d'usinage pivotant (5a) est constituée par une vis de butée réglable sur une longueur de vissage.

6. Tête d'outil selon l'une quelconque des revendications 1 à 5, **caractérisée en ce que** la première butée (12), la seconde butée, le palier de pivotement (9) et/ou la commande de réglage sont disposés dans un espace creux intérieur de la portion porteuse (4), hermétique vis-à-vis, en particulier de la poussière et des liquides.
